# EUROPEAN PATENT SPECIFICATION

(11) **EP 2 526 129 B1**
(45) Date of publication and mention of the grant of the patent: **27.09.2017**
(21) Application number: 11700894.6
(22) Date of filing: 19.01.2011
(51) Int. Cl.: C08F 110/02, C08F 10/00

(54) **ETHYLENE POLYMERISATION PROCESS**
VERFAHREN ZUR POLYMERISIERUNG VON ETHYLEN
PROCÉDÉ DE POLYMÉRISATION D'ÉTHYLÈNE

(30) Priority: 21.01.2010 EP 10075031
(43) Date of publication of application: 28.11.2012
(73) Proprietor: SAUDI BASIC INDUSTRIES CORPORATION (SABIC), Riyadh 11422 (SA)
(72) Inventor: ALT, Helmut, 95447 Bayreuth (DE); ELAGAB, Hamdi Ali, 95447 Bayreuth (DE); AL-HUMYDI, Abdulaziz Hamad, 11422 Riyadh (SA)
(74) Representative: Sabic Intellectual Property Group
(86) International application number: PCT/EP2011/000197
(87) International publication number: WO 2011/088990

(56) References cited:
- EP-A2- 1 059 310
- US-A1- 2004 097 670
- US-B1- 6 825 297

## Description

The invention relates to a process for the polymerization of ethylene in the presence of a catalyst.

Polyethylene is characterized by molecular weight (MW), molecular weight distribution (MWD) and density. A polymer containing a broad range of chain lengths is said to have a broad MWD. These resins have good environmental stress crack resistance (ESCR), good impact resistance and good processability. A polymer with a narrow MWD contains molecules that are nearly the same in molecular weight. It will crystallize at a faster, more uniform rate. This results in a product that will hold its shape. Polymers can also have a bimodal shaped distribution curve which seems to depict a blend of two different polymer populations, each with its particular average and distribution. Resins having a bimodal MWD contain both very short and very long polyethylene molecules, giving the resin excellent physical properties while maintaining good processability. MWD is dependent upon the type of process used to manufacture the particular polyethylene resin. For polymers of the same density and average molecular weight, their melt flow rates are relatively independent of MWD. Therefore, resins that have the same density and melt index (MI) can have very different molecular weight distributions.

Consequently MWD determines the properties of polyethylene and also determines the end-uses of the polymer. MWD mostly determines the mechanical properties while the molecular weight dispersion mostly determines the rheological properties. There is a demand for high molecular weight polyethylene, because an increase of the molecular weight normally improves the physical properties of the resins. However, high molecular weights tend to make polymers harder to process. On the other hand, an increase in the MWD tends to improve the flowability at high shear rate during the processing. Thus, broadening the MWD is one way to improve the processing of high molecular weight polyethylene, in applications requiring fast processing at fairly high die swell, such as in blowing and extrusion techniques. In polyethylene having a high molecular weight combined with a broad MWD, the lower molecular weight portion aids in processing while the higher molecular weight portion contributes to the good impact resistance of the film, such polyethylene being processed at higher throughput rates with lower energy requirements.

Knuutila et al (Adv. Pol. Science 2004; 169; 21-24) disclose several methods of producing polyethylene having a broad and multimodal MWD. Each method has its own disadvantages. Polyethylene having a multimodal MWD can be made by employing two distinct and separate catalysts in the same reactor each producing a polyethylene having a different MWD; however, catalyst feed rate is difficult to control and the polymer particles produced are not uniform in size and density, thus, segregation of the polymer during storage and transfer can produce non-homogeneous products. A polyethylene having a bimodal MWD can also be produced by sequential polymerization in two separate reactors or blending polymers of different MWD during processing; however, both of these methods increase capital cost.

Boehm indicates (Angewandte Chemie International Edition; volume 42, issue 41, pages 5010-5030; 2003) in the article "The ethylene polymerisation with Ziegler Catalysts; fifty years after discovery" that catalysts, technologies and products remain under further development because the potential of the polymerisation process is not fully exploited. In the last years there have been significant advancements in the manufacturing of polyolefins by low-pressure catalytic processes.

It is the object of the present invention to provide an improved catalyst which results in polyethylene having a broad, bimodal or multimodal molecular weight distribution (MWD) without segregation of the polymer during storage.

The catalyst applied in the process according to the invention is a catalyst comprising a Ti, Zr, Hf or V metal centre and
- a ligand according to Formula I 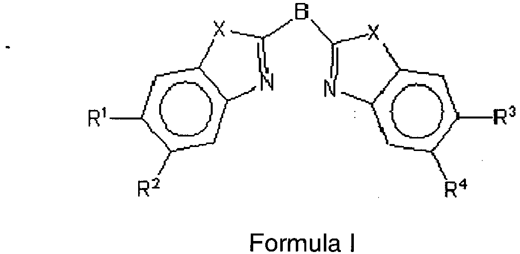 in which
   B = -CH₂-, -CH₂CH₂-, -CH=CH-, 1,2-phenylene or 2,6-pyridyl,
   R¹, R², R³, R⁴ may be independently of one other the same or different selected from H, C₁-C₄ alkyl radical, Br or Cl and X = NH, O or S
   or
- a ligand containing a pyridine moiety wherein the ligand containing pyridine moiety is a 2-benzothiazolyl pyridine ligand, a 2-benzimidazolyl pyridine ligand or a 2- benzoxazolyl pyridine ligand according to Formula III 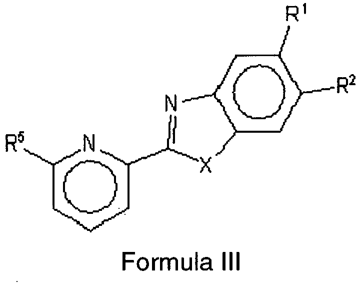 wherein
   R⁵= H, CH₃,
   R¹, R² = H, (C₁-C₄) alkyl radical, Cl or Br X= NH, O or S.
   or
- a N-allyl-2-benzimidazolyl ligand wherein the ligand is N-allyl-2-benzimidazolyl ligand according to Formula IV 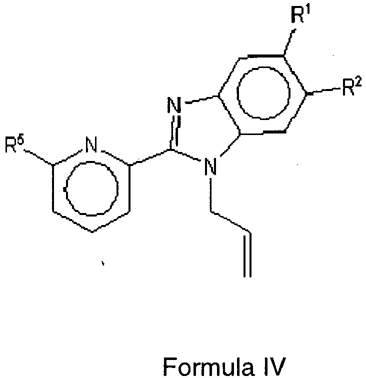 wherein
   R⁵ = H, (C₁-C₄) alky radical and
   R¹, R² = H, (C₁-C₄) alkyl radical, Cl or Br or wherein the ligand is a 1, 2-bis(N-allyl-benzimidazolyl) ligand according to Formula V 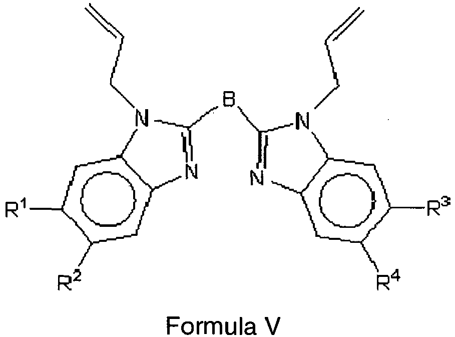
   wherein
   B= methylene, ethylene, substituted 1, 2-phenylene, 2, 6-pyridyl and
   R¹, R², R³, R⁴ may be independently of one other the same or different selected from H, (C₁-C₄) alkyl radical, Cl or Br.

According to a preferred embodiment in the ligand according to Formula I R³ = R¹ and R⁴ = R² which results in the structure according to Formula II: 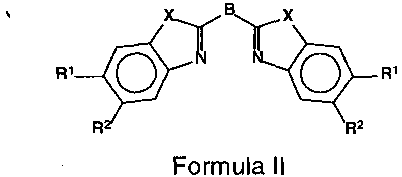 in which
B = -CH₂-, -CH₂CH₂-, -CH=CH-, 1,2-phenylene or 2,6-pyridyl,
R¹, R² may be independently of one other the same or different selected from H, (C₁-C₄) alky radical, Br or Cl and
X = NH, O or S.

Preferably R¹, R² are H or (C₁-C₄) alky radical.
Preferably (C₁-C₄) alkyl radical is CH₃
Preferably X= NH or O.

The metals to be applied as the metal in the active metal centre include metals being able to result in a catalytic activity during an olefin polymerization when coordinated with benzimidazolyl, benzoxazolyl and benzothiazolyl ligands and their derivatives.

The benzimidazole, benzoxazole or benzothiazole based ligand according to Formula I may be substituted.

Suitable ligand precursors include for example 1,2-bis(benzimidazolyl)benzene, 1,2-bis(benzoxazolyl)benzene, 1,2-bis(benzothiazolyl)benzene, 1,2-bis(benzimidazolyl)ethane, 1,2-bis(benzoxazolyl)ethane, 1,2-bis(benzothiazolyl)ethane, 1,2-bis(benzimidazolyl)methane, 1,2-bis(benzoxazolyl)methane 1,2-bis(benzothiazolyl)methane,1,2-bis(benzoxazolyl) pyridine, 1,2-bis(benzimidazolyl) pyridine and 1,2-bis(benzothiazolyl) pyridine.

Suitable examples of substituted derivatives include benzimidazolyl groups, benzoxazolyl groups or benzothiazolyl groups being substituted with allyl, alkyl, vinyl, pentenyl, hexenyl or butenyl groups.

The catalyst according to the invention results in polyethylene having an MWD ranging between 1.5 and 800.

During storage there is substantially no segregation of the polymer.

A further advantage is the ease with which the catalyst can be synthesized.

Another advantage is the possibility to use a number of dicarboxylic acid bridging groups to join the two imidazole units and the possibility to change the structure around the metal center by changing the substitution pattern.

According to a preferred embodiment of the invention the benzimidazole units, the benzoxazole units or the benzothiazole units are joined either by an aliphatic bridging unit or by aromatic groups. A suitable example of benzimidazole units is illustrated in Fig. 1.

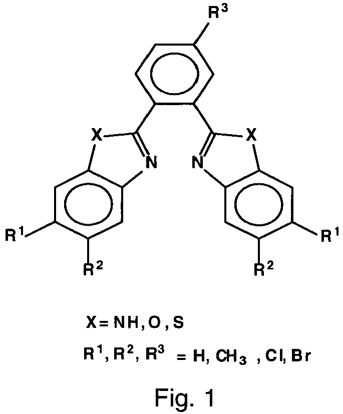

In Formula III, preferably (C₁-C₄) alky radical is CH₃
In Formula III, preferably X= NH or O.

In Formulas II, III and IV the preferred (C₁-C₄) alky radical is CH₃.

Suitable examples of an asymmetric catalyst comprising an active metal centre and a ligand are shown in Figures 2 and 3: 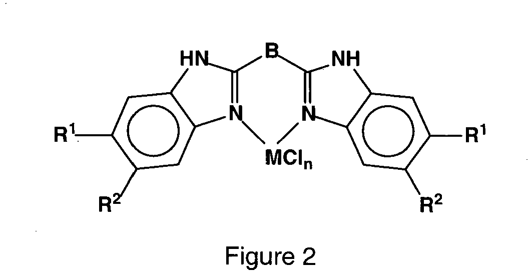 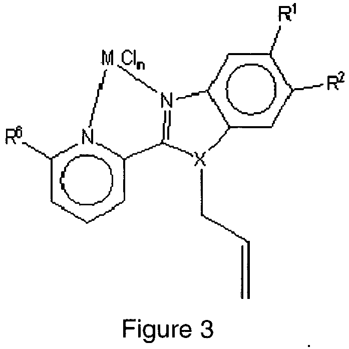 wherein
M = Ti, Zr, Hf or V,
n = 3 or 4,
R⁶ = H or (C₁-C₄) alky radical and
R¹, R² = H, (C₁-C₄) alky radical, Cl or Br.

The preferred (C₁-C₄) alkyl radical in the complex according to the Figures 3 and 4 is CH₃.

The synthesis of benzimidazole based ligand precursors may be performed for example by the reaction of a dicarboxylic acid or an acid anhydride and a diamine in a solvent.

The diamine may be for example o-phenylenediamine.

The solvent may be for example polyphosphoric acid which also may act as dehydrating agent and as catalyst for cyclization.

Suitable dicarboxylic acids and acid anhydrides include for example phtalic acid, succinic acid, malonic acid and phtalic acid anhydride.

This reaction is elucidated in Scheme 1. 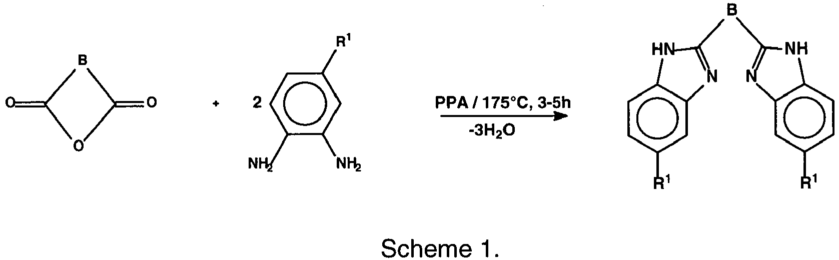 In Scheme 2 B may be selected from methylene, ethylene, 1, 2-phenylene, 1, 2-(4-Me-phenylene) and R¹ may be selected from hydrogen, Cl, Br or (C₁-C₁₀) alkyl radical.

The reaction a dicarboxylic acid or an acid anhydride and a diamine in a solvent may take place for example between 3 and 5 hours at a temperature between 165 °C and 185°C with vigorous stirring .The solvent may be for example polyphosphoric acid. A diluted sodium hydrogen carbonate solution may be applied for workup.

The synthesis of benzooxazole based ligand precursors may be performed for example by the reaction of a dicarboxylic acid or an acid anhydride and an aminophenol in a solvent.

The synthesis of bis benzoxazoles may be performed according to the reaction as elucidated in Scheme 2.

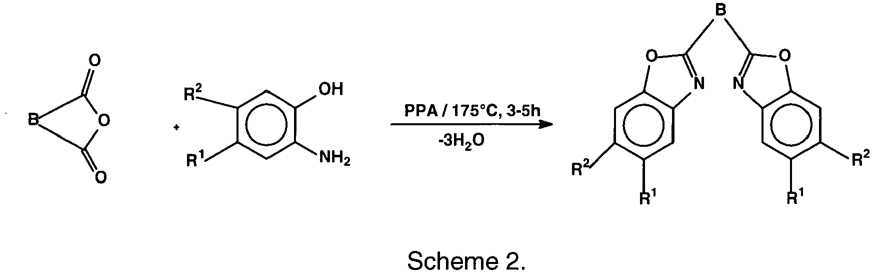

The synthesis of benzothiazole based ligand precursors may be performed for example by the reaction of a dicarboxylic acid or an acid anhydride and an aminothiophenol in a solvent.

The synthesis of bis benzothiazoles may be performed according to the reaction as elucidated in Scheme 3. 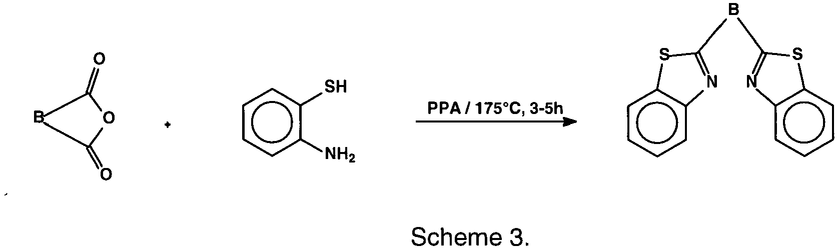 In Scheme 2 and in Scheme 3 B may be selected from methylene, ethylene, 1, 2-phenylene, 1,2-(4methyl-phenylene) and R¹ and R² may be selected from hydrogen, Cl, Br or (C₁-C₄) alkyl radical.

Scheme 4 elucidates the synthesis of 2-benzimidazolyl pyridine, benzoxazolyl pyridine and benzothiazolyl pyridine and their substituted analogues. 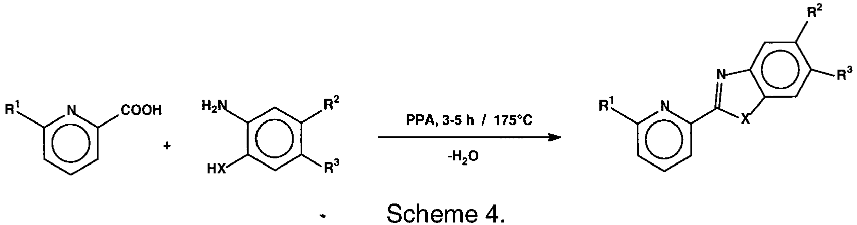 In Scheme 4 R¹ = H or (C₁-C₄) alkyl radical, R² and R³ = H, (C₁-C₄) alkyl radical, CI or Br and X = NH, O, S.

Preferably, the (C₁-C₄) alkyl radical in R¹, R² and R³ is a methyl radical.

Preferably, the catalyst precursor is applied during the polymerization of ethylene after activation in combination with a cocatalyst.

Suitable cocatalysts include for example organoalumoxanes. Suitable organoalumoxanes include for example oligomeric linear and/or cyclic alkyl alumoxanes for example methylalumoxane (MAO), modified methylalumoxane (MMAO), ethylalumoxane (EAO) and triisobutylalumoxane (TIBAO).

A suitable activator may be for example an organo aluminium compound. Suitable organo aluminium compounds may have the formula AIR₃ in which R is a hydrocarbon radical containing 1 - 10 carbon atom. Suitable examples of these organo aluminium compounds include triethylaluminium, triisobutyl aluminium, tri-n-hexyl aluminium and tri octyl aluminium.

According to a preferred embodiment of the invention the catalyst precursor is applied in a homogeneous ethylene polymerisation.

The catalyst precursor may also be applied in other olefin polymerisation processes for example the polymerisation of propylene.

The invention will be elucidated by the following examples without being limited thereto.

### Example 1: Synthesis of 1,2-bis-(2-benzimidazol-2-yl) benzene

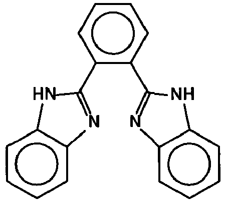

O-phenylenediamine (0.05mol) was mixed with o-phtalic acid (0.025mol) and the mixture was poured in 50 ml of preheated (100°C) polyphosphoric acid. The mixture was stirred and heated at 175°C for 4hours. The reaction mixture was then poured into ice cold water and allowed to stand 12 hours. The precipitate was removed by filtration and washed several times with diluted sodium hydrogen carbonate solution and finally with water. The reaction product was then air dried and weighed (80%).

### Example 2: Synthesis of 1,2-bis-(benzimidazol-2-yl) ethane

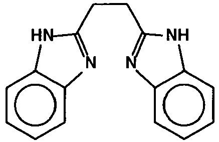

O-phenylenediamine (0.05mol) was mixed with succinic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (75%).

### Example 3: Synthesis of 1,2-bis-(benzimidazol-2-yl) methane

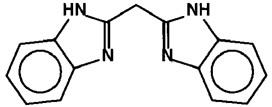

o-phenylenediamine (0.05mol) was mixed with malonic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (87%).

### Example 4: Synthesis of 1,2-bis-(benzoxazol-2-yl) benzene

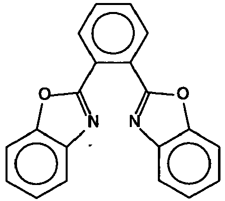

2-aminophenol (0.05mol) was mixed with phthalic acid anhydride (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (90%).

### Example 5: Synthesis of 1,2-bis-(benzoxazol-2-yl) ethane

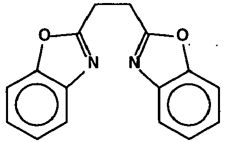

2-aminophenol (0.05mol) was mixed with succinic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (89%).

### Example 6: synthesis of 1,2-bis-(benzoxazol-2-yl) methane

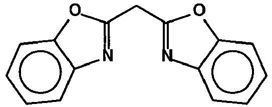

2-aminophenol (0.05mol) was mixed with malonic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (85%).

### Example 7: Synthesis of 1,2-bis-(benzothiazol-2-yl) benzene

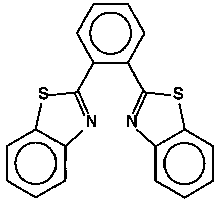

2-aminothiophenol (0.05mol) was mixed with phthalic acid anhydride (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (90%).

### Example 8: Synthesis of 1,2-bis-(benzothiazol-2-yl) ethane

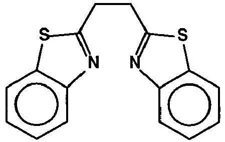

2-aminothiophenol (0.05mol) was mixed with succinic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (90%).

### Example 9: Synthesis of 1,2-bis-(benzothiazol-2-yl) methane

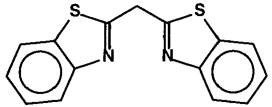

2-aminothiophenol (0.05mol) was mixed with malonic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (55%).

### Example 10: synthesis of 2-benzimidazol-2-yl) pyridine

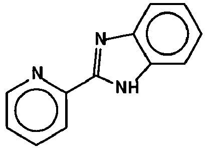

o-phenylenediamine (0.025mol) was mixed with 2-pyridinecarboxylic acid (0-025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (85%).

### Example 11: Synthesis of 2-(benzoxazol-2-yl) pyridine

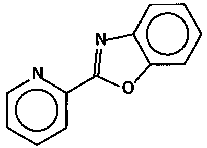

2-aminophenol (0.025mol) was mixed with 2-pyridinecarboxylic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (88%).

### Example 12: Synthesis of 2-(benzothiazol-2-yl) pyridine

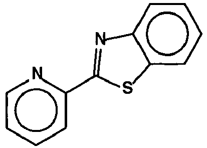

2-aminothiophenol (0.025mol) was mixed with 2-pyridine carboxylic acid (0.025mol) and the mixture was poured in 50 ml of preheated (100°C) polyphosphoric acid. The mixture was stirred and heated at 175°C for 4 hours. The reaction mixture was then poured in ice cold water and allowed to stand 12 hours. The precipitate was removed by filtration and washed several times with diluted sodium hydrogen carbonate solution and finally with water. The reaction product was then air dried and weighed (80%).

### Example 13: Synthesis of N-allyl substituted 1,2-bis-(benzimidazol-2-yl) benzene

The procedure for the reaction of N-allylation was performed by dissolving bis-(benzimidazolyl) benzene (5g, 16.13 mmol) in 10 ml anhydrous dimethylformamide (DMF). Then K₂CO₃ (1.4 equiv) was added to the solution at 25 °C. After 20 min allylbromide (32.26 mmol) was added in portions to the reaction mixture. The reaction was stirred at 25 °C for two days. The inorganic salt was removed by filtration and rinsed twice with dichloromethane. The solution was poured into water and extracted with dichloromethane (2 x 50 ml). The combined organic layers were washed with brine, dried over anhydrous sodium sulphate, filtered, and concentrated in vacuo resulting in viscous oil. Addition of water resulted in the formation of the product in 45% yield.

The reaction scheme for the Examples 14-17 may be illustrated as follows 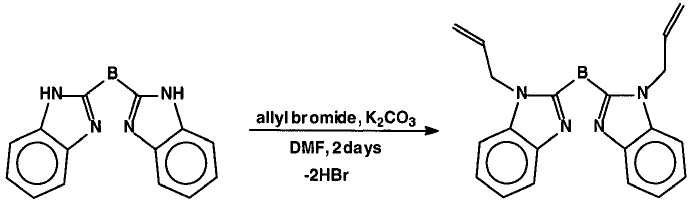 wherein B may be methylene, ethylene , 1,2-phenylene or 2,6-pyridyl

### Example 14: Synthesis of N-allyl substituted 1,2-bis-(benzimidazol-2-yl) ethane

The procedure for the N-allylation was performed by dissolving bis-(benzimidazolyl) ethane (5g, 19.08 mmol) in 10 ml anhydrous DMF. Then K₂CO₃ (1.4 equiv) was added to the solution at 25 °C. After 20 min allylbromide (38.17 mmol) was added in portions to the reaction mixture. The reaction was stirred at 25 °C for two days. The inorganic salt was removed by filtration and rinsed twice with dichloromethane. The solution was poured into water and extracted with dichloromethane (2 x 50 ml). The combined organic layers were washed with brine, dried over anhydrous sodium sulphate, filtered, and concentrated in vacuo resulting in viscous oil. Addition of water resulted in the formation of the product in 55% yield.

### Example 15: Synthesis of N-allyl substituted 1,2-bis-(benzimidazol-2-yl)methane

The reaction of N-allylation was performed by dissolving bis(benzimidazolyl) methane (5g, 20.16 mmol) in 10 ml anhydrous DMF. Then K₂CO₃ (1.4 equiv) was added to the solution at 25 °C. After 20 min allylbromide (40.32 mmol) was added in portions to the reaction mixture. The reaction was stirred at 25 °C for two days. The inorganic salt was removed by filtration and rinsed twice with dichloromethane. The solution was poured into water and extracted with dichloromethane (2 x 50 ml). The combined organic layers were washed with brine, dried over anhydrous sodium sulphate, filtered, and concentrated in vacuo resulting in a viscous oil. Addition of water resulted in the formation of the product in 47% yield.

### Example 16: Synthesis of N-allyl substituted 2,6-bis-(benzimidazol-2-yl) pyridine

The reaction of N-allylation was performed by dissolving 2,6-bis(benzimidazolyl) pyridine (5g, 16.08 mmol) in 10 ml anhydrous DMF. Then K₂CO₃ (1.4 equiv) was added to the solution at 25 °C. After 20 min allylbromide (32.16 mmol) was added in portions to the reaction mixture. The reaction was stirred at 25 °C for two days. The inorganic salt was removed by filtration and rinsed twice with dichloromethane. The solution was poured into water and extracted with dichloromethane (2 x 50 ml). The combined organic layers were washed with brine, dried over anhydrous sodium sulphate, filtered, and concentrated in vacuo resulting in a viscous oil. Addition of water resulted in the formation of the product in 47% yield.

### Example 17: Synthesis of N-allyl substituted 2-(benzimidazol-2-yl) pyridine

The reaction of N-allylation was performed by dissolving 2-benzimidazolyl pyridine (5g, 25.6 mmol) in 10 ml anhydrous DMF. Then K₂CO₃ (1.4 equiv) was added to the solution at 25 °C. Shortly afterwards (20 min), allylbromide (25.6 mmol) was added in portions to the reaction mixture. The reaction was stirred at 25 °C for two days. The inorganic salt was removed by filtration and rinsed twice with dichloromethane. The solution was poured into water and extracted with dichloromethane (2 x 50 ml). The combined organic layers were washed with brine, dried over anhydrous sodium sulphate, filtered, and concentrated in vacuo resulting in a viscous oil. Addition of water resulted in the formation of the product in 85% yield.

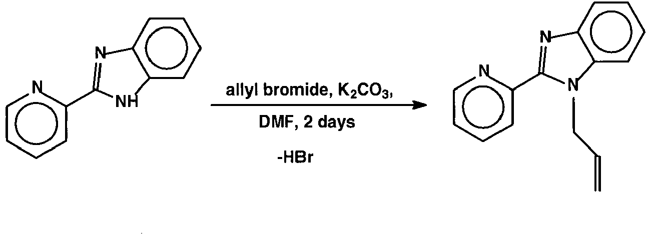

### Example 18: Synthesis of 1,2-Bis(benzimidazolyl) benzene titanium tetrachloride

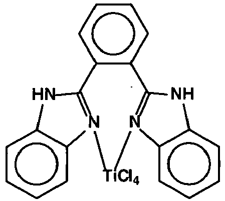

To 0.87g, (2.6 mmol) TiCl₄(THF)₂ in dichloromethane was added 0.81g (2.6 mmol) of 1,2-Bis(benzimidazolyl)benzene according to Example 1. The reaction mixture was stirred 12 hours at 25 °C, filtered and washed several times with the reaction solvent pentane and dried under vacuum and weighed 1.1g (73%).

### Example 19: Synthesis of 1,2-Bis(benzimidazolyl) benzene zirconium tetrachloride

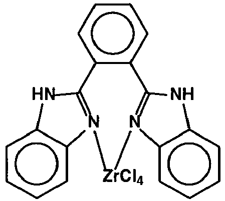

To 0.45g (1.2mmol) ZrCl₄(THF)₂ in dichloromethane was added 0.37g (1.2mmol) 1,2-bis(benzimidazolyl) benzene according to Example 1. The reaction mixture was stirred 12 hours at 25 °C, filtered and washed several times with dichloromethane, then with pentane, dried under vacuum and weighed 0.53g (81.5%).

### Example 20: Synthesis of 1,2-Bis(benzimidazolyl) benzene vanadium trichloride

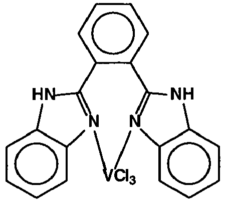

To 0.41g (2.6 mmol) VCl₃ in ether was added 0.81g (2.6mmol) of 1,2-Bis(benzimidazolyl)benzene according to Example 1. The reaction mixture was stirred 12 hours at 25 °C, filtered and washed several times with ether and pentane, dried under vacuum and weighed 0.92g (75.4%).

### Example 21: Synthesis of 1,2-Bis(benzoxazolyl) ethane titanium tetrachloride

To 0.67g, (2 mmol) TiCl₄ (THF) ₂ in dichloromethane was added 0.53g (2 mmol) of 1,2-Bis(benzimidazolyl)ethane. The reaction mixture was stirred 12 hours at 25 °C, filtered and washed several times with the reaction solvent pentane and dried under vacuum and weighed 0.74g (81.3%).

### Example 22: Synthesis of 1,2-Bis(benzoxazolyl) ethane zirconium tetrachloride

To 0.59g (1.6mmol) ZrCl₄ (THF)₂ in dichloromethane was added 0.42g (1.6 mmol) of the free ligand. The reaction mixture was stirred 12 hours at 25 °C, filtered and washed several times with dichloromethane, then with pentane, dried under vacuum and weighed 0.59g (75%).

### Example 23: Synthesis of 1,2-Bis (benzoxazolyl) ethane vanadium trichloride

To 0.46g (2.9 mmol) VCl₃ in ether was added 0.77g (2.9 mmol) of 1, 2-Bis(benzimidazolyl) ethane. The reaction mixture was stirred 12 hours at 25 °C, filtered and washed several times with ether and pentane, dried under vacuum and weighed 0.92g (76.7%).

### Example 24: Synthesis of 1,2-Bis(benzothiazolyl) methane titanium tetrachloride

To 0.82g, (2.4 mmol) TiCl₄(THF)₂ in dichloromethane was added 0.68g (2.4 mmol) of 1,2-Bis(benzimidazolyl) methane according to Example 1. The reaction mixture was stirred 12 hours at 25 °C, filtered and washed several times with the reaction solvent pentane and dried under vacuum and weighed 0.75g (65.8%).

### Example 25: Synthesis of 1,1-Bis(benzothiazolyl) methane zirconium tetrachloride

To 0.5g (1.3mmol) ZrCl₄ (THF)₂ in dichloromethane was added 0.37g (1.3 mmol) of the free ligand. The reaction mixture was stirred 12 hours at 25 °C, filtered and washed several times with dichloromethane, then with pentane, dried under vacuum and weighed 0.52g (76.5%).

### Example 26: Synthesis of 1,1-Bis(benzothiazolyl) methane vanadium trichloride

To 0.45g (2.9 mmol) VCl₃ in ether was added 0.82g (2.9 mmol) of 1, 2-Bis (benzimidazolyl) methane according to Example 1. The reaction mixture was stirred 12 hours at 25 °C, filtered and washed several times with ether and pentane, dried under vacuum and weighed 0.92g (70.8%).

### Example 27: Synthesis of 1,1-Bis(benzimidazolyl) methane titanium tetrachloride

To 0.7g, (2.1 mmol) TiCl₄(THF)₂ in dichloromethane was added 0.52g (2.1 mmol) of 1,1-Bis(benzimidazolyl)methane according to Example 3. The reaction mixture was stirred 12 hours at 25 °C, filtered and washed several times with the reaction solvent pentane and dried under vacuum and weighed 0.72g (78.3%).

### Example 28: Synthesis of 1,1-Bis(benzimidazolyl) methane zirconium tetrachloride

To 0.42g (1.1 mmol) ZrCl₄ (THF) ₂ in dichloromethane was added 0.27g (1.1 mmol) of the free ligand. The reaction mixture was stirred 12 hours at 25 °C, filtered and washed several times with dichloromethane, then with pentane, dried under vacuum and weighed 0.39g (75%).

### Example 29: Synthesis of 2-(benzimidazolyl) pyridine titanium tetrachloride

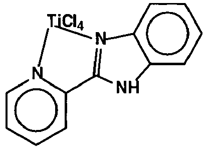

To 0.87g, (2.6 mmol) TiCl₄ (THF)₂ in dichloromethane was added 0.51g (2.6 mmol) of 2-(benzimidazolyl) pyridine according to Example 10. The reaction mixture was stirred 12 hours at 25 °C. The product was filtered and washed several times with pentane and dried under vacuum and weighed (80%) yield.

### Example 30: Synthesis of 2-(benzoxazolyl) pyridine zirconium tetrachloride

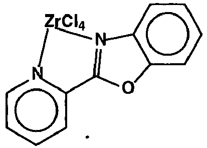

To 0.45g (1.2mmol) ZrCl₄ (THF)₂ in dichloromethane was added 0.24g (1.2 mmol) of 2-(benzoxazolyl)pyridine according to Example 11. The reaction mixture was stirred 12 hours at 25 °C. The product was filtered and washed several times with dichloromethane, then with pentane, dried under vacuum and weighed (85%) yield.

### Example 31: Synthesis of 2-(benzothiazolyl) pyridine vanadium trichloride

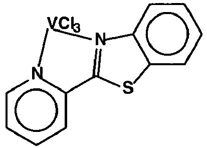

To 0.41g (2.6 mmol) VCl₃ in ether was added 0.55g (2.6 mmol) of 2-(benzothiazolyl) pyridine according to Example 12. The reaction mixture was stirred 12 hours at 25 °C. The product was filtered and washed several times with ether and pentane, dried under vacuum and weighed (85%) yield.

### Example 32 Synthesis of 1,1-Bis(N-allyl-benzimidazolyl) ethane vanadium trichloride

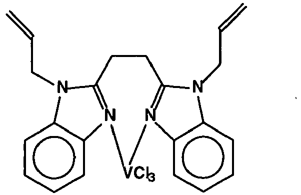

To 0.23g (1.5 mmol) VCl₃ in ether was added 0.51g (1.5 mmol) of 1, 2-Bis (benzimidazolyl) benzene according to Example 13. The reaction mixture was stirred 12 hours at 25 °C, filtered and washed several times with ether and pentane, dried under vacuum and weighed yield (76%).

### .Example 33 Synthesis of 1,1-bis(N-allyl-benzimidazolyl) methane vanadium trichloride

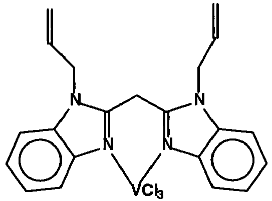

To 0.19g (1.2 mmol) VCl₃ in ether was added 0.39g (1.2 mmol) of 1, 2-Bis (benzimidazolyl) benzene according to Example 13. The reaction mixture was stirred 12 hours at 25 °C, filtered and washed several times with ether and pentane, dried under vacuum and weighed, yield (72%).

### Example 34. Synthesis of 2-(N-allyl-benzimidazolyl) pyridine titanium tetrachloride

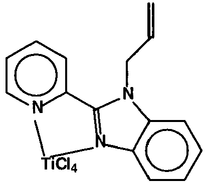

To 0.56g, (1.7 mmol) TiCl₄ (THF)₂ in dichloromethane was added 0.40g (1.7 mmol) of 2-(benzimidazolyl)pyridine according to Example 17. The reaction mixture was stirred 12 hours at 25 °C. The product was filtered and washed several times with pentane and dried under vacuum and weighed (78%) yield.

### Examples 35-47

### The polymerization of ethylene

3.5 mg of the catalyst as indicated in Table1 was suspended in 5 ml of toluene. The addition of methylalumoxane (30% by weight in toluene) resulted in an immediate colour change. The mixture was transferred to a 1l Schlenk flask filled with 250 ml n-pentane. This mixture was transferred to a 1l Büchi laboratory autoclave under inert atmosphere and thermostated. An ethylene pressure of 1 MPa (10 bar) was applied for one hour at 50 °C. The ratio Al: M was 2500:1.

The obtained polyethylene was filtered over a frit, washed with diluted hydrochloric acid, water, and acetone, and finally dried in vacuo. Characteristics of the obtained polyethylene are summarised in Table 1. The melting points ranged between 135 and 145 °C and the freezing points ranged between 118 and 122 °C. The catalyst according to the invention resulted in good polymerisation activities, high molecular weight and broad molecular weight distribution.

### Examples 48-50

### The polymerization of ethylene

Examples 49-51 were identical to Examples 35-47 with the exception of the applied temperatures. The temperature in
Example 48 was 60 °C,
Example 49 was 40 °C and
Example 50 was 20 °C.

**Table 1**

| Example | Catalyst according example | Catalyst | Activity [kg PE/mol cat] | Mₙ [g/mol] | M_{w} [g/mol] | MWD |
|---|---|---|---|---|---|---|
| 36 | 34 | 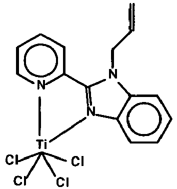 | 432.61 | 460981 | 1915174 | 4.2 |
| 37 | | 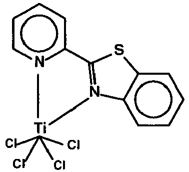 | 548.10 | 296045 | 1685769 | 5.7 |
| 38 | | 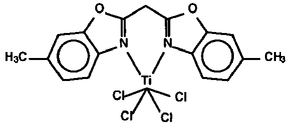 | 374.15 | 6602 | 425865 | 64.5 |
| 39 | | 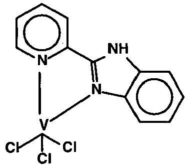 | 164.25 | 79394 | 1083276 | 13.6 |
| 40 | | 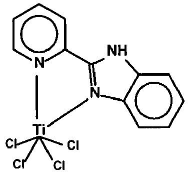 | 306.93 | 406225 | 1765524 | 4.4 |
| 41 | | 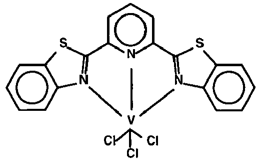 | 284.43 | 275309 | 1652779 | 6.0 |
| 42 | | 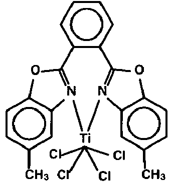 | 401.52 | 201827 | 1545925 | 7.7 |
| 43 | | 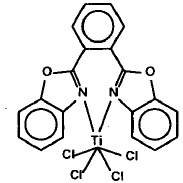 | 354.90 | 16364 | 166086 | 10.2 |
| 44 | | 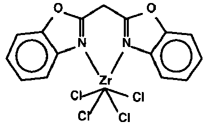 | 424.20 | 41804 | 964097 | 23.1 |
| 45 | 26 | 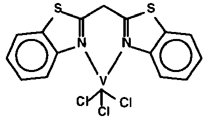 | 379.75 | 250092 | 2883589 | 11.5 |
| 46 | | 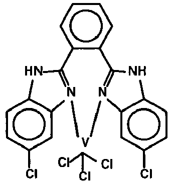 | 165.00 | 141554 | 1311190 | 9.3 |
| 47 | 18 | 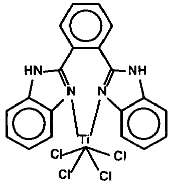 | 252.42 | 66247 | 1273127 | 19.2 |
| 48 | 19 | 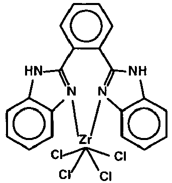 | 227.9 | 4356 | 972211 | 223 |
| 49 | 19 | 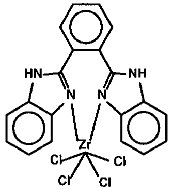 | 225.5 | 4734 | 1177503 | 248 |
| 50 | 19 | 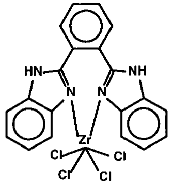 | 116.2 | 1832 | 1271018 | 693 |

## Claims

1. A process for the polymerization of ethylene in the presence of a catalyst comprising a Ti, Zr, Hf or V metal centre and
• a ligand according to Formula I 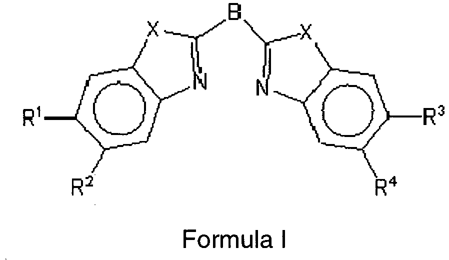 in which
B = -CH₂-, -CH₂CH₂- , -CH=CH-, 1,2-phenylene or 2,6-pyridyl, R¹, R², R³, R⁴ may be independently of one other the same or different selected from H, C₁-C₄ alkyl radical, Br or Cl and
X = NH, O or S
or
• a ligand containing a pyridine moiety wherein the ligand containing pyridine moiety is a 2-benzothiazolyl pyridine ligand, a 2-benzimidazolyl pyridine ligand or a 2- benzoxazolyl pyridine ligand according to Formula III 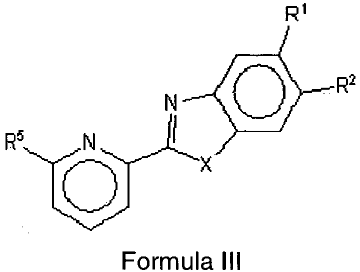 wherein
R⁵= H, CH₃,
R¹, R² = H, (C₁-C₄) alkyl radical, Cl or Br
X= NH, O or S.
or
• a N-allyl-2-benzimidazolyl ligand wherein the ligand is N-allyl-2-benzimidazolyl ligand according to Formula IV 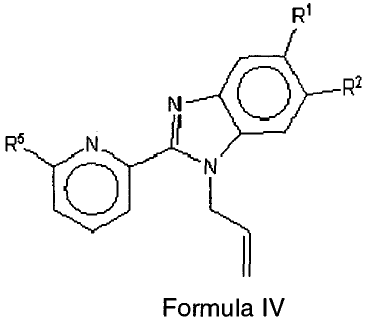
wherein
R⁵ = H, (C₁-C₄) alky radical and R¹, R² = H, (C₁-C₄) alkyl radical, Cl or Br
or wherein the ligand is a 1,2-bis(N-allyl-benzimidazolyl) ligand according to Formula V 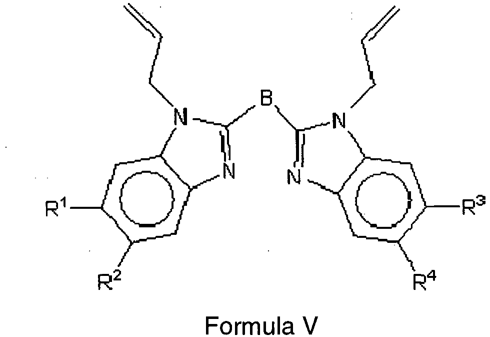
wherein
B= methylene, ethylene, substituted 1,2-phenylene, 2,6-pyridyl and
R¹, R², R³, R⁴ may be independently of one other the same or different selected from H, (C₁-C₄) alkyl radical, Cl or Br.

2. A process according to Claim 1 wherein in the ligand according to Formula I is a ligand according to Formula II: 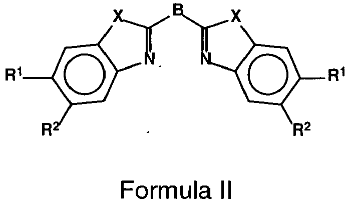 in which
B = -CH₂-, -CH₂CH₂-, -CH=CH-, 1,2-phenylene or 2,6-pyridyl,
R¹, R² may be independently of one other the same or different selected from H, (C₁-C₄) alky radical, Br or Cl and
X=NH,OorS.

3. A process according to any one of Claims 1-2 wherein R¹, R², R³, R⁴ may be independently of one other the same or different H or (C₁-C₄) alkyl radical.

4. A process according to any one of Claims1-3 wherein the (C₁-C₄) alkyl radical is CH₃.

5. A process according to any one of Claims1-4 wherein X = NH or O.

## Patentansprüche

1. Verfahren zur Polymerisation von Ethylen in Gegenwart eines Katalysators mit einem Ti-, Zr-, Hf- oder V-Metallzentrum und
• einem Liganden der Formel I 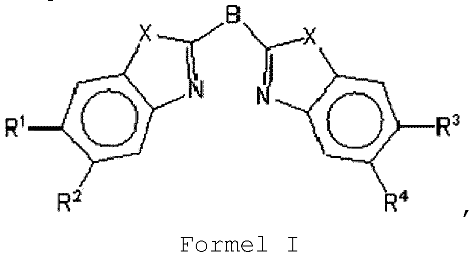 in der
B = -CH₂-, -CH₂CH₂-, -CH=CH-, 1,2-Phenylen oder 2,6-Pyridyl,
R¹, R², R³ und R⁴ unabhängig voneinander gleich oder verschieden aus H, einem C₁-C₄-Alkylrest, Br oder Cl ausgewählt sein können und
X = NH, O oder S,
oder
• einem Liganden, der einen Pyridinteil enthält, wobei es sich bei dem Liganden, der einen Pyridinteil enthält, um einen 2-Benzothiazolylpyridin-Liganden, einen 2-Benzimidazolylpyridin-Liganden oder einen 2-Benzoxazolylpyridin-Liganden der Formel III 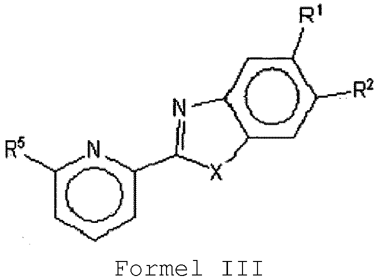 handelt, wobei
R⁵ = H, CH₃,
R¹, R² = H, (C₁-C₄) -Alkylrest, Cl oder Br
X = NH, O oder S,
oder
• einem N-Allyl-2-benzimidazolyl-Liganden, wobei es sich bei dem Liganden um einen N-Allyl-2-benzimidazolyl-Liganden der Formel IV 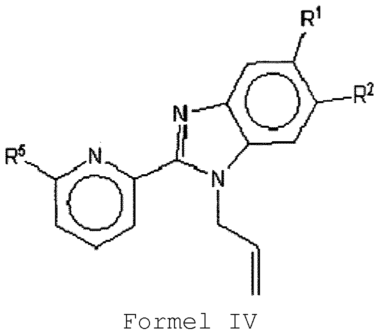
handelt, wobei
R⁵ = H, (C₁-C₄)-Alkylrest und
R¹, R² = H, (C₁-C₄) -Alkylrest, Cl oder Br,
oder wobei sich bei dem Liganden um einen 1,2-Bis(N-allyl-2-benzimidazolyl)-Liganden der Formel V 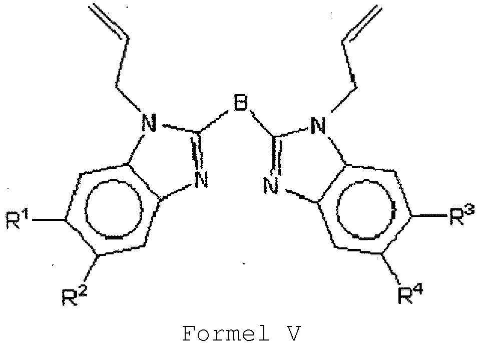 handelt, wobei
B = Methylen, Ethylen, substituiertes 1,2-Phenylen, 2,6-Pyridyl und
R¹, R², R³ und R⁴ unabhängig voneinander gleich oder verschieden aus H, einem (C₁-C₄)-Alkylrest, Cl oder Br ausgewählt sein können.

2. Verfahren nach Anspruch 1, wobei sich bei dem Liganden der Formel I um einen Liganden der Formel II handelt: 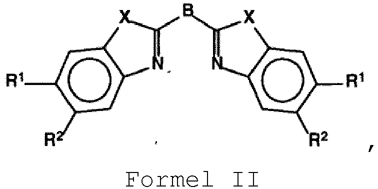 in der
B = -CH₂-, -CH₂CH₂-, -CH=CH-, 1,2-Phenylen oder 2,6-Pyridyl,
R¹ und R² unabhängig voneinander gleich oder verschieden aus H, einem (C₁-C₄) -Alkylrest, Br oder Cl ausgewählt sein können und
X = NH, O oder S.

3. Verfahren nach einem der Ansprüche 1-2, wobei R¹, R², R³ und R⁴ unabhängig voneinander gleich oder verschieden für H oder einen (C₁-C₄)-Alkylrest stehen können.

4. Verfahren nach einem der Ansprüche 1-3, wobei es sich bei dem (C₁-C₄)-Alkylrest um CH₃ handelt.

5. Verfahren nach einem der Ansprüche 1-4, wobei X = NH oder O.

## Revendications

1. Procédé pour la polymérisation d'éthylène en présence d'un catalyseur comprenant un centre métallique Ti, Zr, Hf ou V et
• un ligand répondant à la formule I 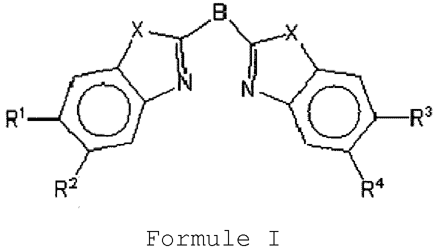 dans laquelle
B = -CH₂-, -CH₂CH₂-, -CH=CH-, un groupe 1,2-phénylène ou un groupe 2,6-pyridyle,
R¹, R², R³, R⁴ peuvent être indépendamment les uns des autres identiques ou différents et choisis entre H, un radical alkyle en C₁-C₄, Br ou Cl et
X = NH, O ou S,
ou
• un ligand contenant une fraction pyridine, le ligand contenant une fraction pyridine étant un ligand 2-benzothiazolylpyridine, un ligand 2-benzimidazolylpyridine ou un ligand 2-benzoxazolylpyridine répondant à la formule III 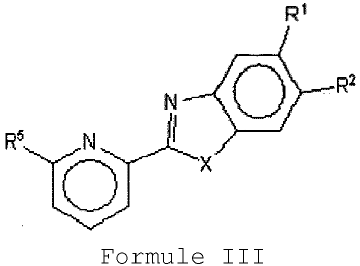 dans laquelle
R⁵ = H, CH₃,
R¹, R² = H, un radical alkyle en C₁-C₄, Cl ou Br
X = NH, O ou S,
ou
• un ligand *N*-allyl-2-benzimidazolyle, le ligand étant un ligand *N*-allyl-2-benzimidazolyle répondant à la formule IV 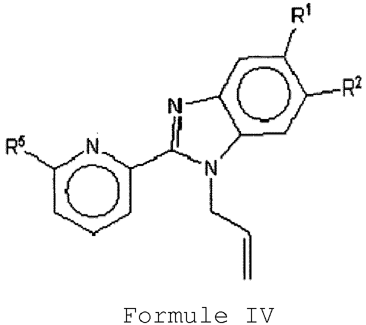
dans laquelle
R⁵ = H, un radical alkyle en C₁-C₄ et
R¹, R² = H, un radical alkyle en C₁-C₄, Cl ou Br
ou le ligand étant un ligand 1,2-bis(*N-*allylbenzimidazolyle) répondant à la formule V 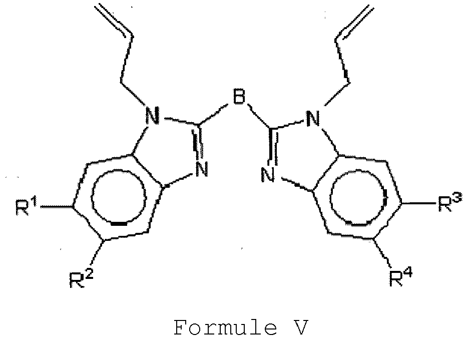
dans laquelle
B = un groupe méthylène, éthylène, 1,2-phénylène substitué, 2,6-pyridyle et
R¹, R², R³, R⁴ peuvent être indépendamment les uns des autres identiques ou différents et choisis entre H, un radical alkyle en C₁-C₄, Cl ou Br.

2. Procédé selon la revendication 1 dans lequel le ligand répondant à la formule I est un ligand répondant à la formule II : 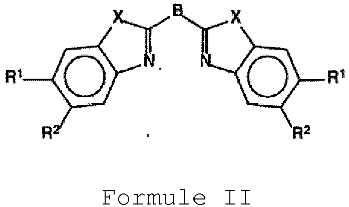 dans laquelle
B = -CH₂-, -CH₂CH₂-, -CH=CH-, un groupe 1,2-phénylène ou un groupe 2,6-pyridyle,
R¹, R² peuvent être indépendamment l'un de l'autre identiques ou différents et choisis entre H, un radical alkyle en C₁-C₄, Br ou Cl et
X = NH, O ou S.

3. Procédé selon l'une quelconque des revendications 1-2 dans lequel R¹, R², R³, R⁴ peuvent être indépendamment les uns des autres H ou des radicaux alkyle en C₁-C₄ identiques ou différents.

4. Procédé selon l'une quelconque des revendications 1-3 dans lequel le radical alkyle en C₁-C₄ est CH₃.

5. Procédé selon l'une quelconque des revendications 1-4 dans lequel X = NH ou O.
